# EUROPEAN PATENT APPLICATION

(11) **EP 3 076 046 A1**
(43) Date of publication of application: **05.10.2016**
(21) Application number: 14865273.8
(22) Date of filing: 24.10.2014
(51) Int. Cl.: F16H 3/093

(54) **VEHICLE MANUAL TRANSMISSION**

(30) Priority: 26.11.2013 JP 2013243530
(71) Applicant: Aisin AI Co., Ltd., Nishio-shi, Aichi 445-0006 (JP)
(72) Inventor: NISHIMURA Shigeto, Nishio-shi Aichi 445-0006 (JP)
(74) Representative: TBK
(86) International application number: PCT/JP2014/078319
(87) International publication number: WO 2015/079838

(57) **Abstract**

Two of "shared drive gears", which are "a drive gear G23i used as second-gear drive gear and third-gear drive gear in common" and "a drive gear G57i used as fifth-gear drive gear and seventh-gear drive gear in common", are arranged to the input shaft A1. The teeth number of second final drive gear Gfi2 is larger than the teeth number of first final drive gear Gfi1. Gfi1, a first-gear driven gear G1o, a second-gear driven gear G2o, a reverse-gear drive gear rotates unitarily with a second-gear driven gear G2o, a sixth-gear driven gear G6o and a fifth-gear driven gear are arranged to the first intermediate shaft A2, and Gfi2, a fourth-gear driven gear G4o, a third-gear driven gear G3o, a reverse-gear driven gear GRo and a seventh-gear driven gear are arranged to the second intermediate shaft A3 in order from the one side of axial direction. Accordingly, the transmission with four shafts without an idle shaft, whose overall length is short, can achieve a widening range of a reduction ratio.

## Description

### TECHNICAL FIELD

The present invention relates to a manual transmission for a vehicle, and more particularly, to a manual transmission with seven gear stages for moving a vehicle frontward, and a single gear stage for moving a vehicle backward.

### BACKGROUND ART

In recent years, for the purpose of further improving a fuel efficiency or the like, it has been developed to increase the number of gear stages of a manual transmission from six gear stages to seven gear stages. For example, a manual transmission disclosed in Japanese Patent Application Laid-Open (kokai) No. 2013-213569 is known as a manual transmission (hereinafter, referred to as a "M/T") for a vehicle with seven gear stages for moving a vehicle frontward, and a single gear stage for moving a vehicle backward. The "seven-speed M/T with a single gear stage for moving a vehicle backward" described in this literature, comprises an input shaft which forms a power transmission system with an output shaft of an engine, an output shaft which forms a power transmission system with drive wheels, two of intermediate shafts (a first intermediate shaft and a second intermediate shaft), and an idol shaft, which are rotatably supported and parallel to each other by a housing.

### SUMMARY OF INVENTION

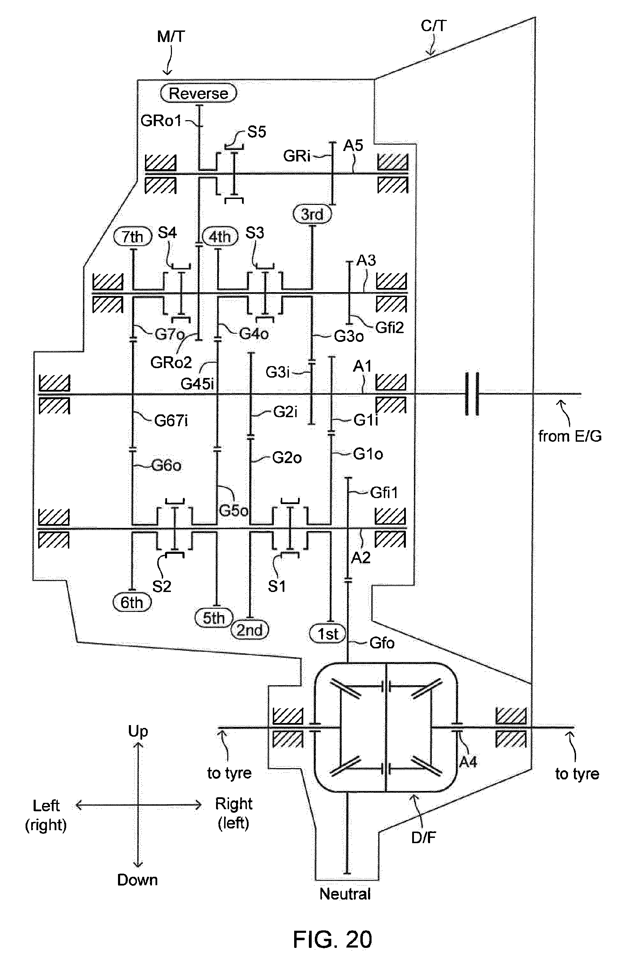

FIG. 20 shows an example of the "seven-speed M/T with the single gear stage for moving the vehicle backward" which is described in the above literature. In the seven-speed M/T shown in FIG. 20, a first-gear drive gear G1i, a third-gear drive gear G3i, a second-gear drive gear G2i, a "first shared drive gear G45i used as a fourth-gear drive gear and a fifth-gear drive gear in common", and a "second shared drive gear G67i used as a sixth-gear drive gear and a seventh-gear drive gear in common" are arranged to an input shaft A1 in order from a side closer to an engine E/G such that they are unable to rotate relative to the input shaft A1. A first final drive gear Gfi1, a first-gear driven gear G1o, a second-gear driven gear G2o, a fifth-gear driven gear G5o, and a sixth-gear driven gear G6o, are arranged to a first intermediate shaft A2 in order from the side closer to an engine E/G. The first final drive gear Gfi1 is unable to rotate relative to the first intermediate shaft A2. The driven gears G1o, G2o, G5o, and G6o are able to rotate relative to the first intermediate shaft A2. The driven gears G1o, G2o, G5o, and G6o always mesh with the G1i, G2i, G45i, and G67i, respectively. A second final drive gear Gfi2, a third-gear driven gear G3o, a fourth-gear driven gear G4o, a second reverse-gear driven gear GRo2, and a seventh-gear driven gear G7o are arranged to a second intermediate shaft A3 in order from the side closer to an engine E/G. The second final drive gear Gfi2 is unable to rotate relative to the second intermediate shaft A3. The driven gears G3o, and G4o are able to rotate relative to the second intermediate shaft A3. The driven gears G3o and G4o always mesh with the G3i and G45i, respectively. The second reverse-gear driven gear GRo2 is unable to rotate relative to the second intermediate shaft A3. The seventh-gear driven gear G7o is able to rotate relative to the second intermediate shaft A3, and always meshes with G67i. A "final-driven gear Gfo which always meshes with Gfi1 and Gfi2" is arranged to an output shaft A4. The final-driven gear Gfo is unable to rotate relative to the output shaft A4. A reverse-gear drive gear GRi and a first reverse-gear driven gear GRo1 are arranged to an idol shaft A5 in order from the side closer to an engine E/G. The reverse-gear drive gear GRi always meshes with G1i, and is unable to rotate relative to the idol shaft A5. The first reverse-gear driven gear GRo1 always meshes with a second reverse-gear driven gear GRo2, and is able to rotate relative to the idol shaft A5.

In the seven-speed M/T shown in FIG. 20, a "sleeve S1 which is relatively non-rotatably arranged around A2, and is movable in an axial direction of A2" is made to engage with G1o (G2o), so that a power transmission system for a first (second) gear stage is established (A1 -> G1i (G2i) -> G1o (G2o) -> S1 -> A2 -> Gfi1 -> Gfo -> A4). A "sleeve S2 which is relatively non-rotatably arranged around A2, and is movable in an axial direction of A2" is made to engage with G5o (G6o), so that a power transmission system for a fifth (sixth) gear stage is established (A1 -> G45i (G67i) -> G5o (G6o) -> S2 -> A2 -> Gfi1 -> Gfo -> A4). A "sleeve S3 which is relatively non-rotatably arranged around A3, and is movable in an axial direction of A3" is made to engage with G3o (G4o), so that a power transmission system for a third (fourth) gear stage is established (A1 -> G3i (G45i) -> G3o (G4o) -> S3 -> A3 -> Gfi2 -> Gfo -> A4). A "sleeve S4 which is relatively non-rotatably arranged around A3, and is movable in an axial direction of A3" is made to engage with G7o, so that a power transmission system for a seventh gear stage is established (A1 -> G67i -> G7o -> S4 -> A3 -> Gfi2 -> Gfo -> A4). A "sleeve S5 which is relatively non-rotatably arranged around A5, and is movable in an axial direction of A5" is made to engage with GRo1, so that a power transmission system for a reverse-gear stage is established (A1 -> G1i -> GRi -> A5->S5 ->GRo1 -> GRo2 -> A3 -> Gfi2 -> Gfo -> A4).

As described above, in the seven-speed M/T shown in FIG. 20, two of the "shared drive gears" are provided to the input shaft. The "shared drive gear" means a single drive gear which is used as two different gear stages in common. This allows a "seven-speed M/T with a single gear stage for moving a vehicle backward" to have a short length in an axial direction, wherein the seven-speed M/T is of a "type that comprises the input shaft, the first intermediate shaft, the second intermediate shaft, the output shaft, and the idol shaft."

In general, in a front-wheel drive vehicle (so-called, FF vehicle) having an engine arranged at a front side of the vehicle, the engine (or an output shaft of the engine) is typically arranged transversely relative to the vehicle. An input shaft of a M/T is coaxially connected with the output shaft of the engine via a clutch. Therefore, the M/T is arranged beside the engine via the clutch such that the shafts of the M/T are arranged transversely to the vehicle. That is, an assembly of the engine, the clutch, and the M/T is transversely arranged in a relatively narrow space between a right-side frame and a left-side frame in an engine room. Accordingly, a requirement to shorten an overall axial length of the M/T is extremely high. In view of the above, the seven-speed M/T shown in FIG. 20 can be said to be suitable for the FF vehicle.

Meanwhile, the seven-speed M/T shown in FIG. 20 inevitably needs the idle shaft to achieve the reverse-gear stage. Thus, there is a great need for a "seven-speed M/T with a single gear stage for moving a vehicle backward" which does not comprise the idle shaft, and whose overall axial length is as equally short as that of the seven-speed M/T shown in FIG. 20. Further, there is also a great need for increasing (so-called, widening range of the reduction ratio) a difference (ratio) between a reduction ratio of a first-gear stage (lowest-gear stage) and the reduction ratio of a seventh-gear stage (highest-gear stage).

Accordingly, an object of the present invention is to provide a "seven-speed M/T with a single gear stage for moving a vehicle backward", which comprises the input shaft, the output shaft, the first intermediate shaft, and the second intermediate shaft, but does not comprise the idle shaft, whose overall length is short, and which can achieve the widening range of the reduction ratio.

The manual transmission for a vehicle according to the present invention is "the seven-speed M/T with the single gear stage for moving the vehicle backward", which comprises the input shaft, the output shaft, the first intermediate shaft, and the second intermediate shaft, but does not comprise the idle shaft as described above. The features of the manual transmission for the vehicle according to the present invention are:
(1) the point that two of "shared drive gears" ("the drive gear used as the second-gear drive gear and the third-gear drive gear in common" and "the drive gear used as the fifth-gear drive gear and the seventh-gear drive gear in common") are arranged to the input shaft.
(2-1) the point that the first final drive gear, the first-gear driven gear, the second-gear driven gear, the reverse-gear drive gear, which rotates unitarily with the second-gear driven gear, the sixth-gear driven gear, and the fifth-gear driven gear are arranged to the first intermediate shaft in order from the one side of axial direction of the input shaft, and the second final drive gear, the fourth-gear driven gear, the third-gear driven gear, the reverse-gear driven gear, and the seventh-gear driven gear are arranged to the second intermediate shaft in order from the one side of axial direction of the input shaft, or,
(2-2) the point that the first final drive gear, the fifth-gear driven gear, the sixth-gear driven gear, the reverse-gear drive gear, which rotates unitarily with the second-gear driven gear, the second-gear driven gear, and the first-gear driven gear are arranged to the first intermediate shaft in order from the one side of axial direction of the input shaft, and the second final drive gear, the seventh-gear driven gear, the reverse-gear driven gear, the third-gear driven gear, and the fourth-gear driven gear are arranged to the second intermediate shaft in order from the one side of axial direction of the input shaft.

In addition, for the second-gear stage and the third-gear stage use a drive gear in common and the fifth-gear stage and the seventh-gear stage use another drive gear in common, there are following three patterns as the configuration that the reduction ratio of the output shaft to the input shaft in the second-gear stage is larger than the reduction ratio of the output shaft to the input shaft in the third-gear stage, and the reduction ratio of the output shaft to the input shaft in the fifth-gear stage is larger than the reduction ratio of the output shaft to the input shaft in the seventh-gear stage.

### (Pattern 1)

The number of the teeth of the second-gear driven gear is larger than the number of the teeth of the third-gear driven gear, and the number of the teeth of the fifth-gear driven gear is larger than the number of the teeth of the seventh-gear driven gear, and the number of the teeth of the first final drive gear is equal to the number of the teeth of the second final drive gear. The distance between the input shaft and the first intermediate shaft is larger than the distance between the input shaft and the second intermediate shaft.

### (Pattern 2)

The number of the teeth of the second-gear driven gear is equal to the number of the teeth of the third-gear driven gear, and the number of the teeth of the fifth-gear driven gear is equal to the number of the teeth of the seventh-gear driven gear, and the number of the teeth of the first final drive gear is smaller than the number of the teeth of the second final drive gear. The distance between the input shaft and the first intermediate shaft is equal to the distance between the input shaft and the second intermediate shaft.

### (Pattern 3)

The number of the teeth of the second-gear driven gear is larger than the number of the teeth of the third-gear driven gear, and the number of the teeth of the fifth-gear driven gear is larger than the number of the teeth of the seventh-gear driven gear, and the number of the teeth of the first final drive gear is smaller than the number of the teeth of the second final drive gear. The distance between the input shaft and the first intermediate shaft is larger than the distance between the input shaft and the second intermediate shaft.

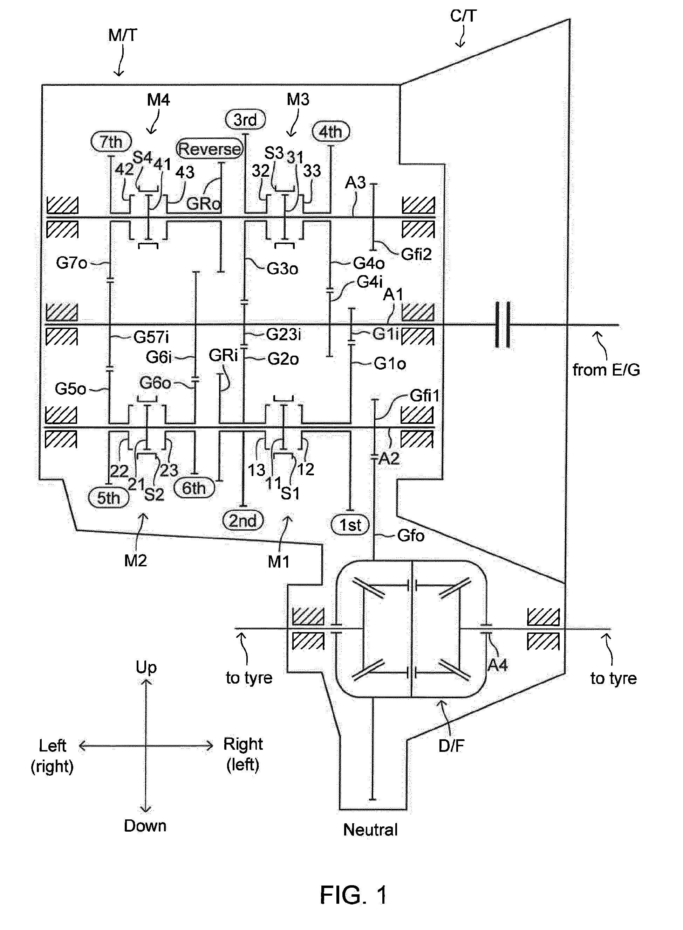

"The seven-speed M/T, with the single gear stage for moving the vehicle backward" and without comprising the idle shaft, which has same "number of gears arranged to the input shaft" as a seven-speed M/T shown in FIG. 20, can be configured by adopted the feature of (1) and (2-1), or (1) and (2-2) (refer to FIG. 1, etc. described below). Consequently, "the seven-speed M/T with the single gear stage for moving the vehicle backward" which has short overall length as same as the seven-speed M/T shown in FIG. 20 can be provided without comprising the idle shaft.

There can be the configuration that three "common drive gears" are arranged to an input shaft for further shortening of the overall length (of the M/T) or the like. However, the configuration according to the present invention can achieve "wider range of the reduction ratio" than the configuration above. It is based on that the more "common drive gears" increases, the more "the degree of freedom of design of the reduction ratio from first to seventh gear" decreases. Accordingly, "the seven-speed M/T with the single gear stage for moving the vehicle backward" which comprises the input shaft, the output shaft, the first intermediate shaft, and the second intermediate shaft, but does not comprise the idle shaft, and whose overall length is short, and which can achieve the widening range of the reduction ratio can be provided.

### BRIEF DISCRIPTION OF DRAWINGS

FIG. 1 is a skeleton view that indicates a main cross-section of a seven-speed manual transmission in a neutral state according to an embodiment of the present invention.
FIG. 2 is a view that indicates an example of a shift pattern of a shift lever in a seven-speed manual transmission.
Fig. 3 is a skeleton view corresponding to FIG. 1, which indicates the cross-section in a first-gear state.
Fig. 4 is a skeleton view corresponding to FIG. 1, which indicates the cross-section in a second-gear state.
Fig. 5 is a skeleton view corresponding to FIG. 1, which indicates the cross-section in a third-gear state.
Fig. 6 is a skeleton view corresponding to FIG. 1, which indicates the cross-section in a fourth-gear state.
Fig. 7 is a skeleton view corresponding to FIG. 1, which indicates the cross-section in a fifth-gear state.
Fig. 8 is a skeleton view corresponding to FIG. 1, which indicates the cross-section in a sixth-gear state.
Fig. 9 is a skeleton view corresponding to FIG. 1, which indicates the cross-section in a seventh-gear state.
Fig. 10 is a skeleton view corresponding to FIG. 1, which indicates the cross-section in a reverse-gear state.
FIG. 11 is a skeleton view corresponding to FIG. 1, which indicates the cross-section according to an alternative of an embodiment of the present invention.

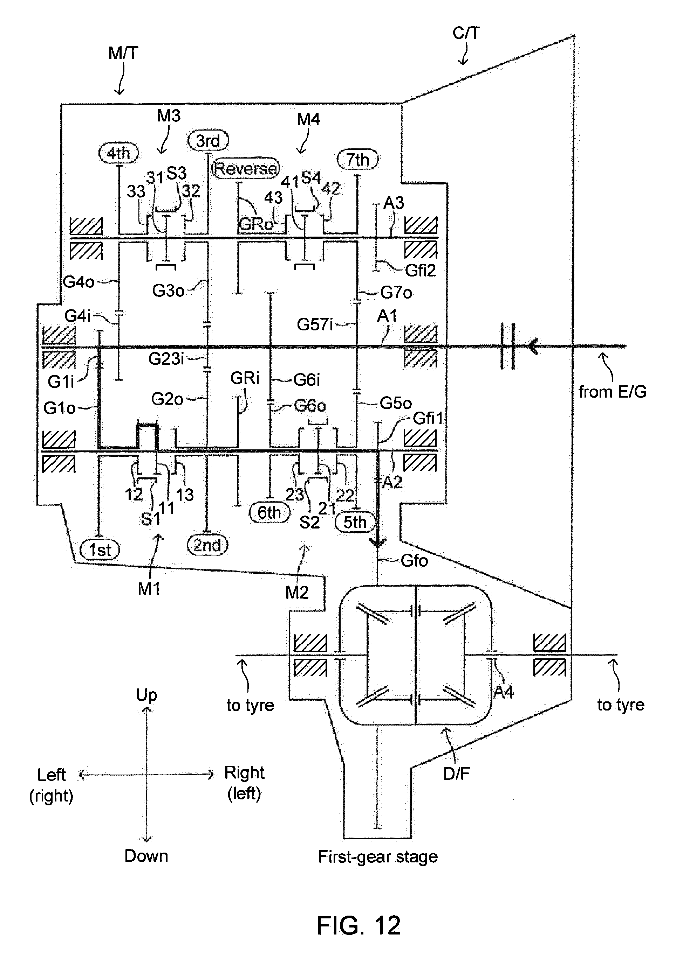

Fig. 12 is a skeleton view corresponding to FIG. 11, which indicates the cross-section in a first-gear state.

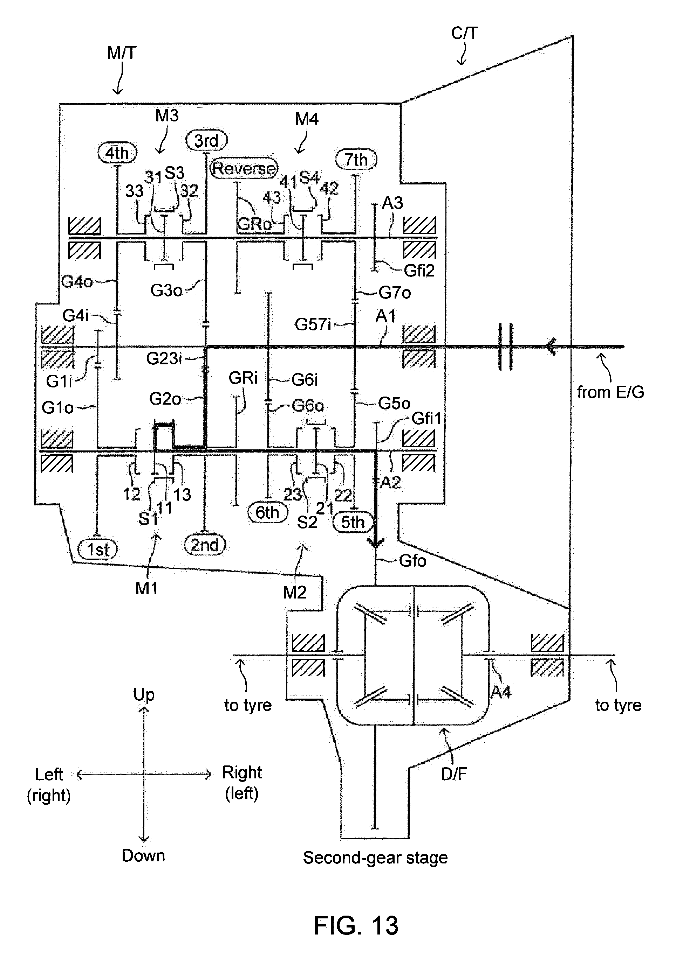

Fig. 13 is a skeleton view corresponding to FIG. 11, which indicates the cross-section in a second-gear state.

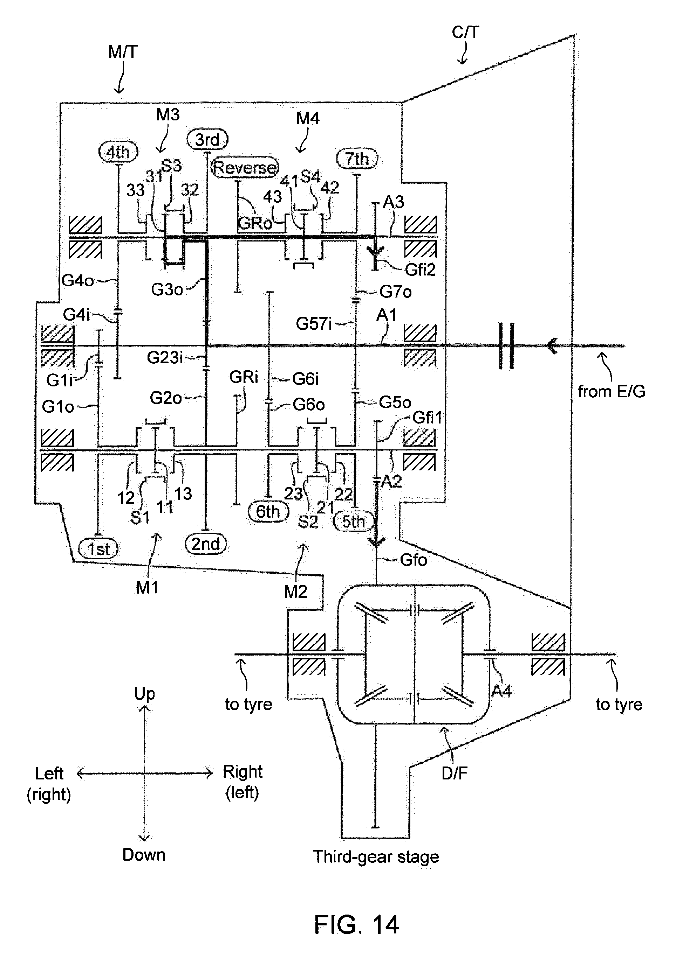

Fig. 14 is a skeleton view corresponding to FIG. 11, which indicates the cross-section in a third-gear state.

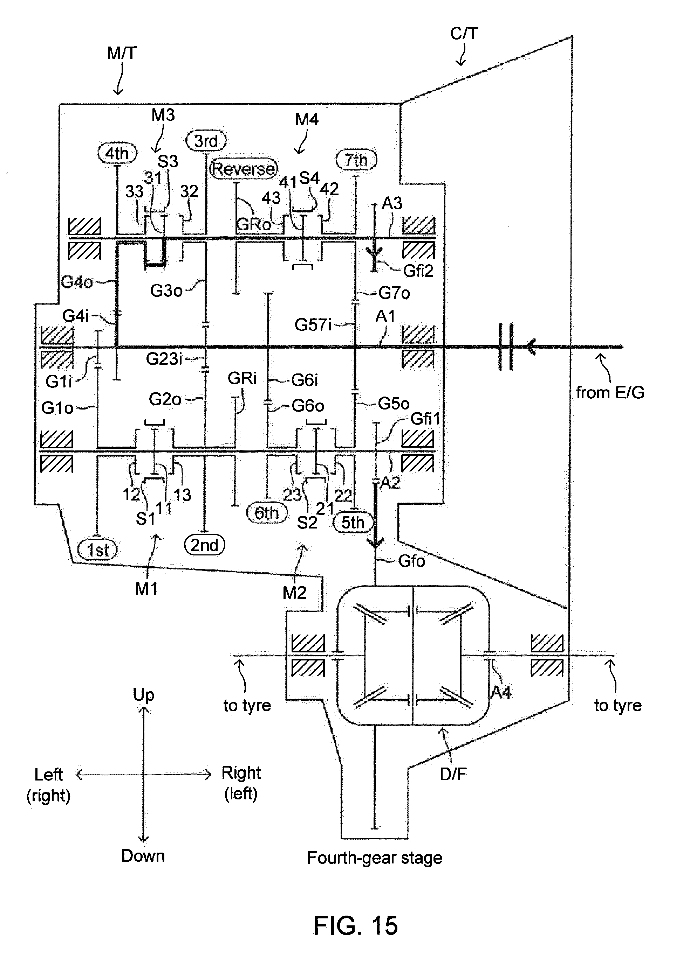

Fig. 15 is a skeleton view corresponding to FIG. 11, which indicates the cross-section in a fourth-gear state.

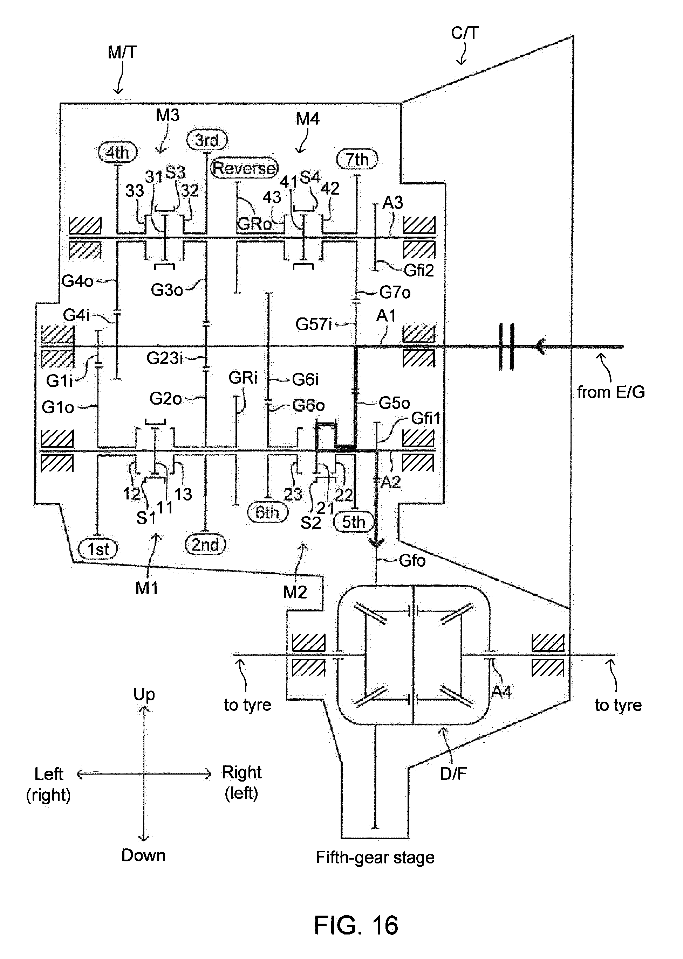

Fig. 16 is a skeleton view corresponding to FIG. 11, which indicates the cross-section in a fifth-gear state.

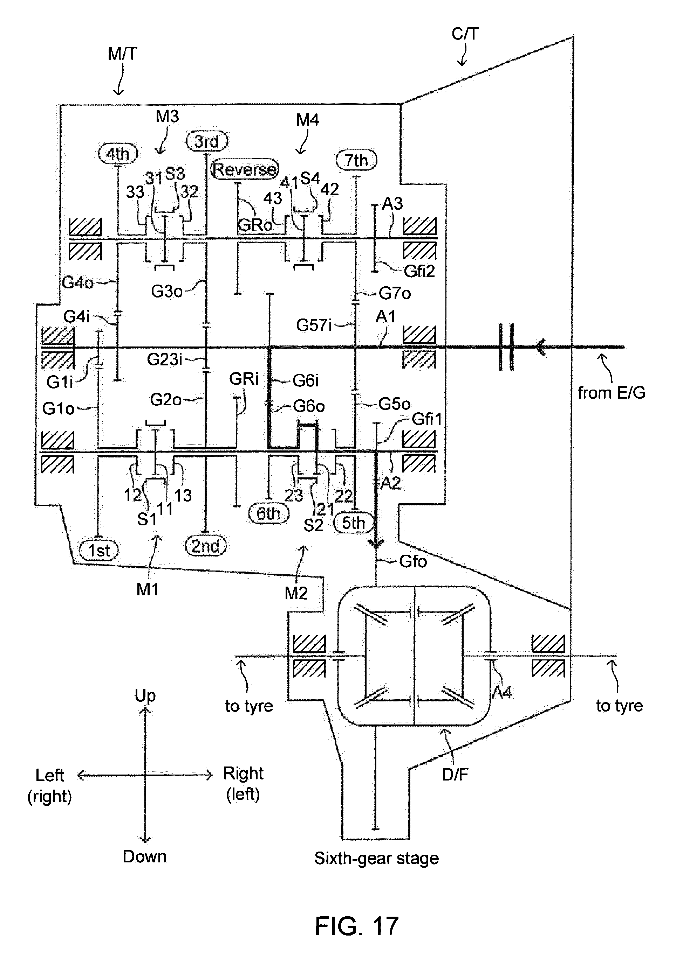

Fig. 17 is a skeleton view corresponding to FIG. 11, which indicates the cross-section in a sixth-gear state.

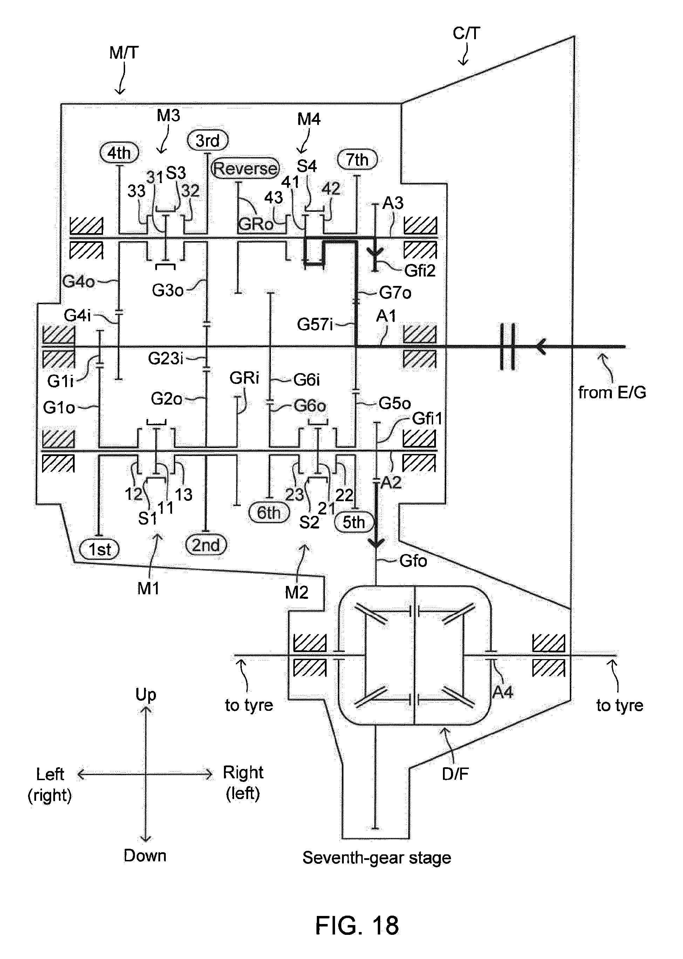

Fig. 18 is a skeleton view corresponding to FIG. 11, which indicates the cross-section in a seventh-gear state.

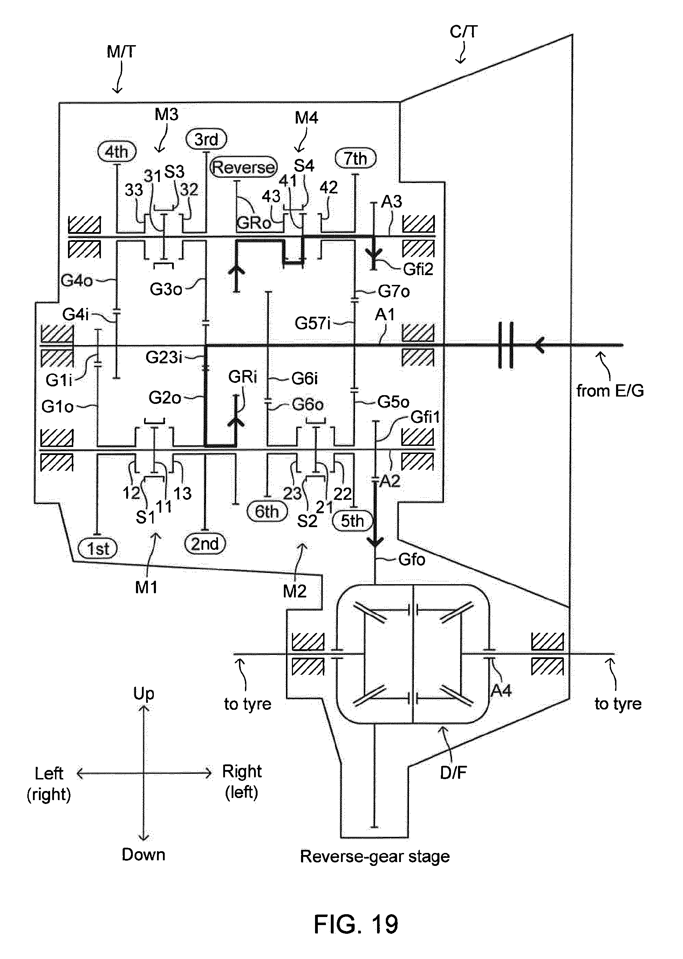

Fig. 19 is a skeleton view corresponding to FIG. 11, which indicates the cross-section in a reverse-gear state.
Fig. 20 is a skeleton view corresponding to FIG. 1, which indicates the cross-section according to a prior art.

### DESCRIPTION OF EMBODIMENTS

Hereinafter, a manual transmission for a vehicle according to an embodiment of the present invention will be described with reference to the drawings. A manual transmission M/T according to the embodiment of the present invention comprises seven gear stages (first to seventh gear stages) for moving a vehicle frontward and a single gear stage (reverse gear stage) for moving a vehicle backward. In particular, the manual transmission is applied to an FF vehicle on which an engine (or an output shaft of an engine) is arranged transversely to the vehicle.

### (Configuration)

As shown in FIG. 1, the M/T according to the embodiment of the present invention comprises four shafts which are an input shaft A1, a first intermediate shaft A2, a second intermediate shaft A3, and an output shaft A4, but does not comprise an idol shaft. The four shafts are rotatably supported by a housing through a plurality of bearings (or bushes, etc.) provided to the housing, such that the shafts are eccentrically to and parallel to each other. The input shaft A1 is connected to an output shaft of the engine E/G via a clutch. The output shaft A4 is connected to a differential gear mechanism (differential) D/F, and drive wheels (front wheels) via an unillustrated connection mechanism. The M/T is arranged beside the engine E/G via the clutch such that the shafts of the M/T are arranged transversely to the vehicle.

A first-gear drive gear G1i, a fourth-gear drive gear G4i, a drive gear G23i used as a second-gear drive gear and a third-gear drive gear in common, a sixth-gear drive gear G6i, and a drive gear G57i used as a fifth-gear drive gear and a seventh-gear drive gear in common are coaxially and relatively non-rotatably fixed to an input shaft A1, in order from a side closer to the engine E/G (the clutch).

A first-gear driven gear G1o, a second-gear driven gear G2o, a reverse-gear drive gear GRi which rotates unitarily with the second-gear driven gear G2o, a sixth-gear driven gear G6o, and a fifth-gear driven gear G5o, are coaxially arranged to the first intermediate shaft A2, in order from the side closer to the engine E/G, such that they are relatively rotatable. The driven gears G1o, G2o, G6o, and G5o always mesh with the drive gears G1i, G23i, G6i, and G57i, respectively. A first final drive gear Gfi1 is coaxially and relatively non-rotatably fixed to the first intermediate shaft A2 at a closer side to the engine E/G with respect to the G1o.

A fourth-gear driven gear G4o, a third-gear driven gear G3o, a reverse-gear driven gear GRo, and a seventh-gear driven gear G7o are coaxially arranged to the second intermediate shaft A3 in order from the side closer to the engine E/G, such that they are relatively rotatable. The driven gears G4o, G3o, GRo, and G7o always mesh with the drive gears G4i, G23i, GRi and G57i, respectively. A second final drive gear Gfi2 is coaxially and relatively unrotably fixed to the second intermediate shaft A3 at a closer side to the engine E/G with respect to the G4o.

A final driven gear Gfo which is integrated with a housing of a D/F having a well-known structure is coaxially arranged to an output shaft A4 (which, in the present example, rotates unitarily with the housing of the D/F). The Gfo always meshes with the Gfi1 and the Gfi2.

The second-gear stage and the third-gear stage share a common drive gear. The fifth-gear stage and the seventh-gear stage share another common drive gear. The following three patterns exist, in order to have a "reduction ratio of the output shaft A4 to the input shaft A1" in the second-gear stage be larger than a "reduction ratio of the output shaft A4 to the input shaft A1" in the third-gear stage, and in order to have a "reduction ratio of the output shaft A4 to the input shaft A1" in the fifth-gear stage be larger than a "reduction ratio of the output shaft A4 to the input shaft A1" in the seventh-gear stage.

### (Pattern 1)

The number of the teeth of the driven gear G2o is larger than the number of the teeth of the driven gear G3o, the number of the teeth of the driven gear G5o is larger than the number of the teeth of the driven gear G7o, and the number of the teeth of the first final drive gear Gfi1 is equal to the number of the teeth of the second final drive gear Gfi2. The distance between the input shaft A1 and the first intermediate shaft A2 is larger than the distance between the input shaft A1 and the second intermediate shaft A3.

### (Pattern 2)

The number of the teeth of the driven gear G2o is equal to the number of the teeth of the driven gear G3o, the number of the teeth of the driven gear G5o is equal to the number of the teeth of the driven gear G7o, and the number of the teeth of the first final drive gear Gfi1 is smaller than the number of the teeth of the second final drive gear Gfi2. The distance between the input shaft A1 and the first intermediate shaft A2 is equal to the distance between the input shaft A1 and the second intermediate shaft A3.

### (Pattern 3)

The number of the teeth of the driven gear G2o is larger than the number of the teeth of the driven gear G3o, the number of the teeth of the driven gear G5o is larger than the number of the teeth of the driven gear G7o, and the number of the teeth of the first final drive gear Gfi1 is smaller than the number of the teeth of the second final drive gear Gfi2. The distance between the input shaft A1 and the first intermediate shaft A2 is larger than the distance between the input shaft A1 and the second intermediate shaft A3.

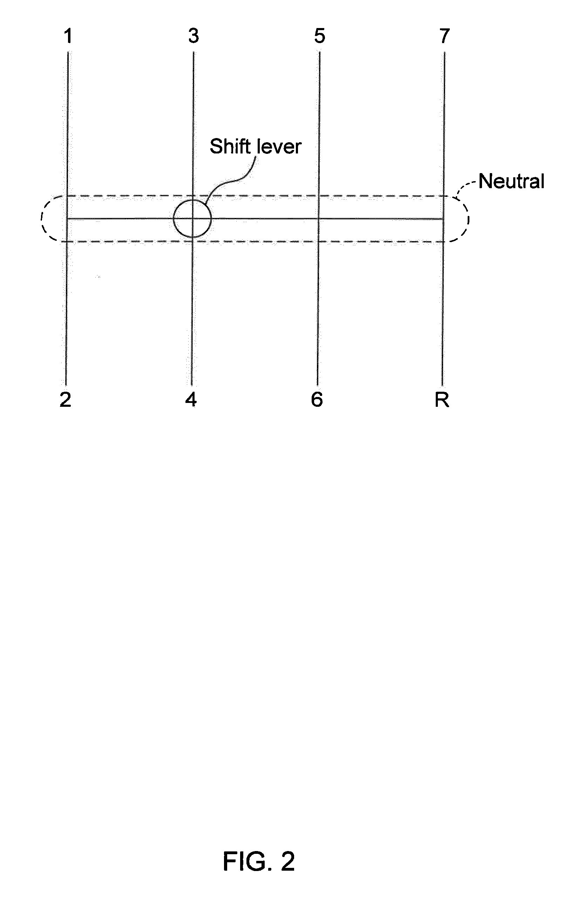

In addition, as shown in FIG. 1, the M/T comprises first to fourth change-over mechanisms M1 to M4. The change-over of the gear stage of the M/T is achieved by the actuation of the change-over mechanisms M1 to M4. The change-over mechanisms M1 to M4 are operated in response to an operation of an unillustrated shift lever using a plurality of unillustrated link mechanisms connecting between the shift lever and the change-over mechanisms M1 to M4. An example (so-called "H-type") of a shift pattern of the shift lever used for the M/T is shown in FIG. 2.

The first change-over mechanism M1 is arranged with respect to the first intermediate shaft A2, between the first-gear driven gear G1o and the second-gear driven gear G2o. The M1 comprises a connecting piece 11 which coaxially rotates unitarily with the first intermediate shaft A2, a connecting piece 12 which coaxially rotates unitarily with the driven gear G1o, a connecting piece 13 which coaxially rotates unitarily with the driven gear G2o, and a sleeve S1 which is coaxially arranged with respect to the first intermediate shaft A2 and is movable in an axial direction of the first intermediate shaft A2. The sleeve S1 is operated in response to the operation of the shift lever using the link mechanism described above.

The sleeve S1 can engage with the connecting pieces 11, 12 and 13, in a spline-engagement manner. In an unconnected state in which the sleeve S1 engages with only the connecting piece 11 in a spline-engagement manner (i.e., when the sleeve S1 is at the position shown in FIG. 1), both of the driven gears G1o and G2o are able to rotate relative to the first intermediate shaft A2. In a first-gear state in which the sleeve S1 engages with the connecting pieces 11 and 12 in a spline-engagement manner (i.e., when the sleeve S1 reaches a right-hand-side-position from the position shown in FIG. 1), the driven gear G2o is able to rotate relative to the first intermediate shaft A2, whereas the driven gear G1o is unable to rotate relative to the first intermediate shaft A2. In a second-gear state in which the sleeve S1 engages with the connecting pieces 11 and 13 in a spline-engagement manner (i.e., when the sleeve S1 reaches a left-hand-side-position from the position shown in FIG. 1), the driven gear G1o is able to rotate relative to the first intermediate shaft A2, whereas the driven gear G2o is unable to rotate relative to the first intermediate shaft A2. That is, according to the first change-over mechanism M1, one of the unconnected state, the first-gear state, and the second-gear state is selectively achieved in response to the position of the sleeve S1 which is operated by the operation of the shift lever.

Detailed descriptions regarding the second to fourth change-over mechanisms M2, M3 and M4 will be omitted, since they have a structure similar to the structure of the first change-over mechanism M1. The second change-over mechanism M2 is arranged to the first intermediate shaft A2, between the fifth-gear driven gear G5o and the sixth-gear driven gear G6o. The second change-over mechanism M2 comprises connecting pieces 21, 22 and 23, and a sleeve S2. According to the second change-over mechanism M2, one of the unconnected state, the fifth-gear state, and the sixth-gear state is selectively achieved in response to the position of the sleeve S2 which is operated by the operation of the shift lever.

The third change-over mechanism M3 is arranged to the second intermediate shaft A3, between the third-gear driven gear G3o and the fourth-gear driven gear G4o. The third change-over mechanism M3 comprises connecting pieces 31, 32 and 33, and a sleeve S3. According to the third change-over mechanism M3, one of the unconnected state, the third-gear state, and the fourth-gear state is selectively achieved in response to the position of the sleeve S3 which is operated by the operation of the shift lever.

The fourth change-over mechanism M4 is arranged to the second intermediate shaft A3, between the seventh-gear driven gear G7o and the reverse-gear driven gear GRo. The fourth change-over mechanism M4 comprises connecting pieces 41, 42 and 43, and a sleeve S4. According to the fourth change-over mechanism M4, one of the unconnected state, the seventh-gear state, and the reverse-gear state is selectively achieved in response to the position of the sleeve S4 which is operated by the operation of the shift lever.

### (Operation)

Operations of the thus configured M/T will next be described. Descriptions regarding each gear stage of the M/T will be made in order. Hereinafter, a value "(the number of teeth of Gfo) / (the number of teeth of Gfi1)" is referred to as a "first final reduction ratio GTf1", and a value "(the number of teeth of Gfo) / (the number of teeth of Gfi2)" is referred to as a "second final reduction ratio GTf2."

### <First-gear stage>

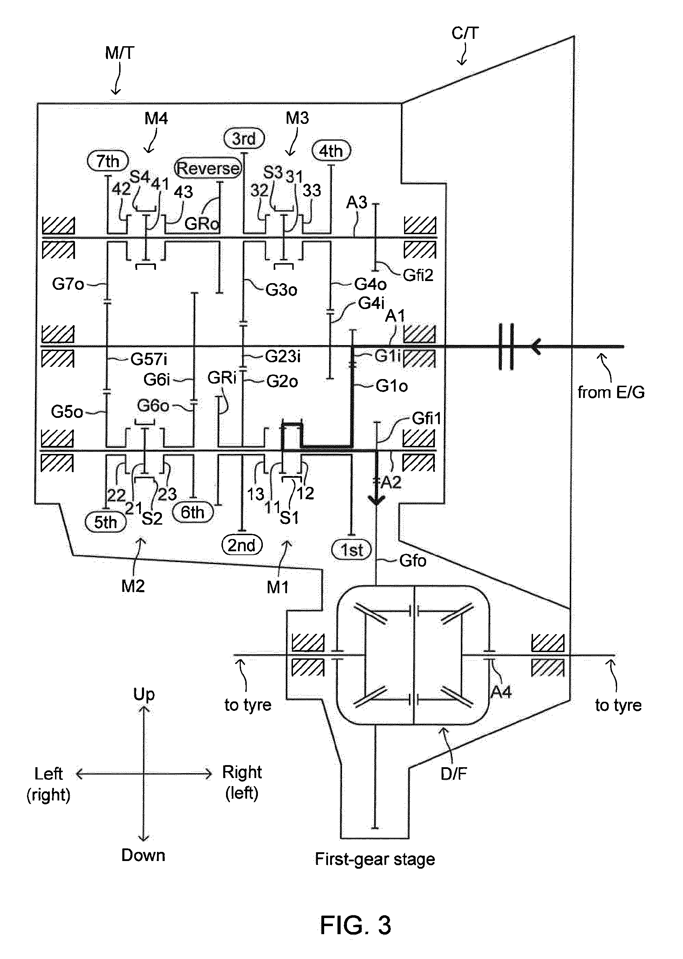

When the shift lever is operated to the position corresponding to the first-gear stage, only the sleeve S1 is set at the first-gear state, and the other sleeves S2, S3 and S4 are set at the unconnected states, as shown in FIG. 3. Consequently, a power transmission system of (A1 -> G1i -> G1o -> 12 -> S1 -> 11 -> A2 -> Gfi1 -> Gfo -> A4) is formed in the M/T, as shown by the solid line in FIG. 3. Accordingly, the reduction ratio of the M/T (which is equal to a ratio of rotational speed of the input shaft A1 to a rotational speed of the output shaft A4) is set at a reduction ratio GT1 of a first-gear stage, when the vehicle is running frontward. The GT1 is represented by a value ((the number of teeth of G1o) / (the number of teeth of G1i)) * (first final reduction ratio GTf1).

### <Second-gear stage>

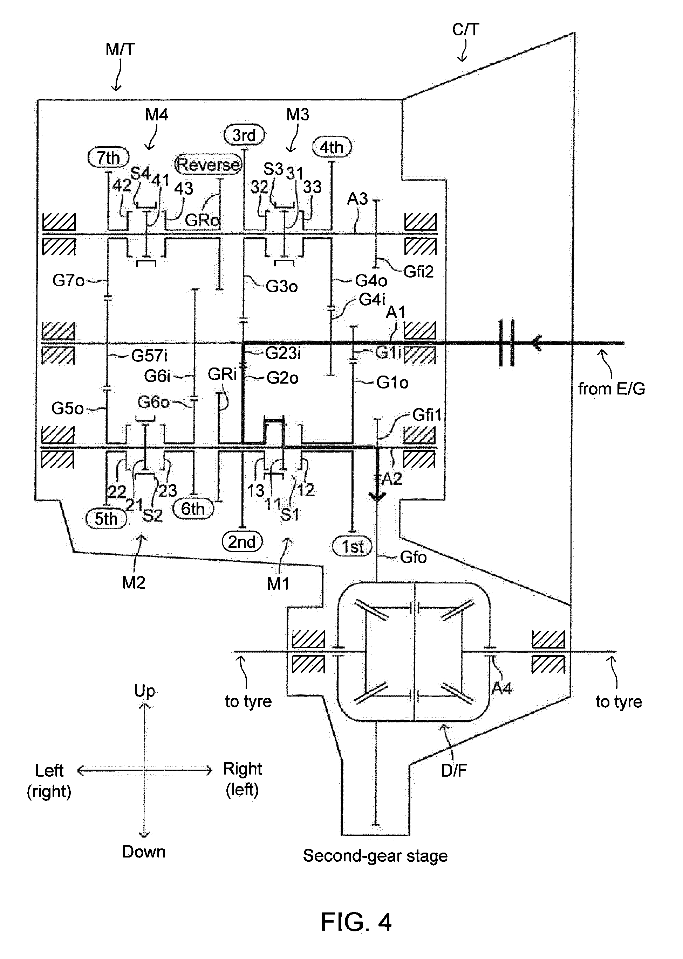

When the shift lever is operated to the position corresponding to the second-gear stage, only the sleeve S1 is set at the second-gear state, and the other sleeves S2, S3 and S4 are set at the unconnected states, as shown in FIG. 4. Consequently, the power transmission system of (A1 -> G23i -> G2o -> 13 -> S1 - > 11 -> A2 -> Gfi1 -> Gfo -> A4) is formed in the M/T as shown by the solid line in FIG. 4. Accordingly, the reduction ratio of the M/T is set at a reduction ratio GT2 of a second-gear stage, when the vehicle is running frontward. The GT2 is represented by a value ((the number of teeth of G2o) / (the number of teeth of G23i)) * (first final reduction ratio GTf1). Thus, a relationship of GT1 > GT2 is established.

### <Third-gear stage>

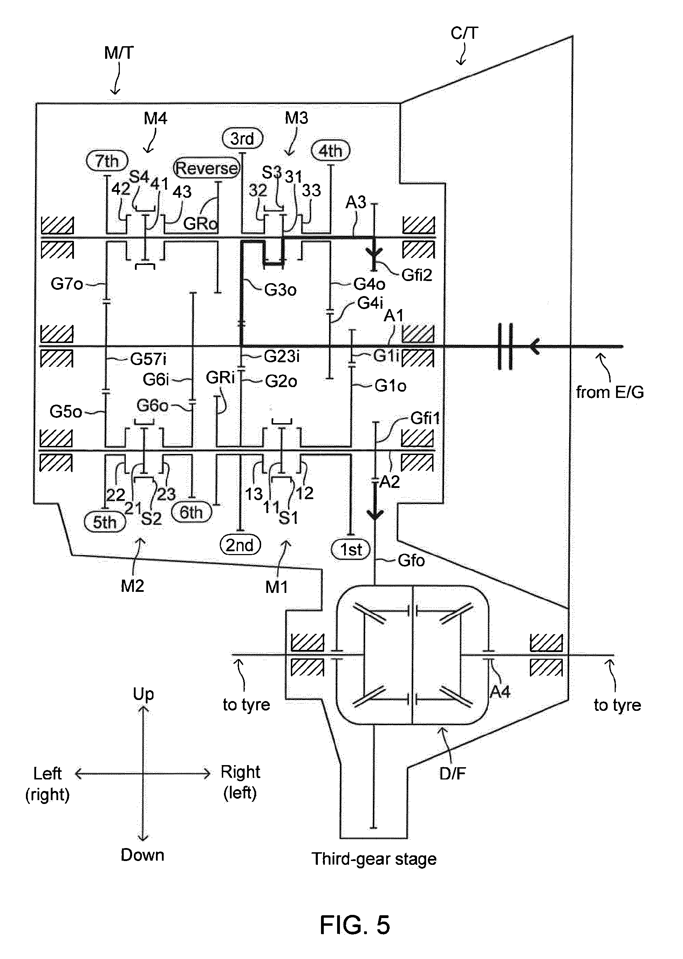

When the shift lever is operated to the position corresponding to the third-gear stage, only the sleeve S3 is set at the third-gear state, and the other sleeves S1, S2 and S4 are set at the unconnected states, as shown in FIG. 5. Consequently, the power transmission system of (A1 -> G23i -> G3o -> 32 -> S3 - > 31 -> A3 -> Gfi2 -> Gfo -> A4) is formed in the M/T as shown by the solid line in FIG. 5. Accordingly, the reduction ratio of the M/T is set at a reduction ratio of third-gear stage GT3, when the vehicle is running frontward. The GT3 is represented by a value ((number of teeth of G3o) / (number of teeth of G23i)) * (second final reduction ratio GTf2). Thus, a relationship of GT2 > GT3 is established.

### <Fourth-gear stage>

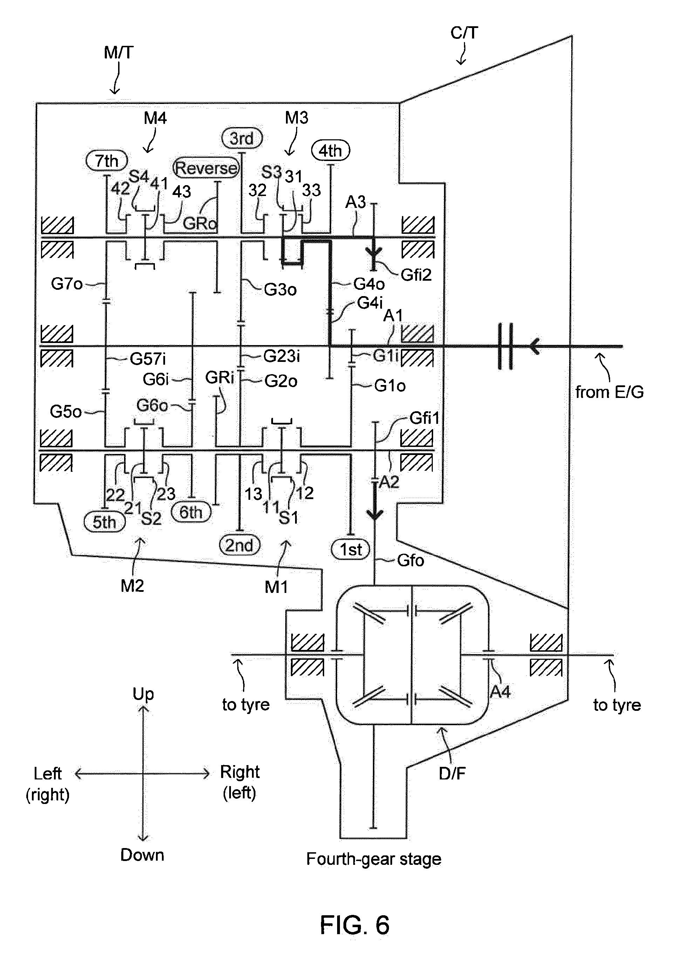

When the shift lever is operated to the position corresponding to the fourth-gear stage, only the sleeve S3 is set at the fourth-gear state, and the other sleeves S1, S2 and S4 are set at the unconnected states, as shown in FIG. 6. Consequently, the power transmission system of (A1 -> G4i -> G4o -> 33 -> S3 -> 31 -> A3 -> Gfi2 -> Gfo -> A4) is formed in the M/T as shown by the solid line in FIG. 6. Accordingly, the reduction ratio of the M/T is set at a reduction ratio of fourth-gear stage GT4, when the vehicle is running frontward. The GT4 is represented by a value ((number of teeth of G4o) / (number of teeth of G4i)) * (second final reduction ratio GTf2). Thus, a relationship of GT3 > GT4 is established.

### <Fifth-gear stage>

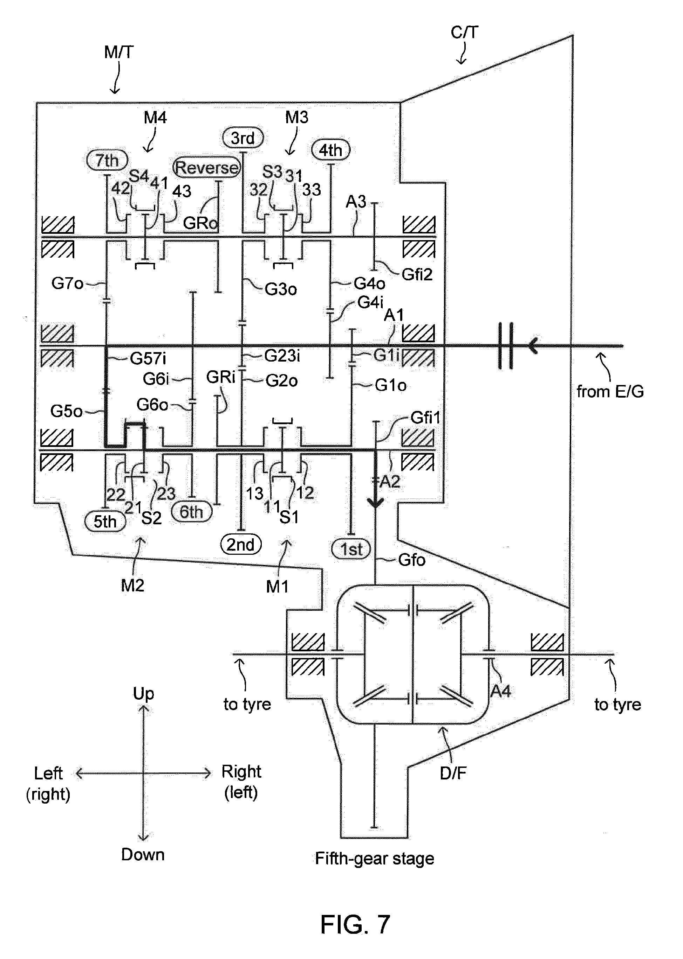

When the shift lever is operated to the position corresponding to the fifth-gear stage, only the sleeve S2 is set at the fifth-gear state, and the other sleeves S1, S3 and S4 are set at the unconnected states, as shown in FIG. 7. Consequently, the power transmission system of (A1 -> G57i -> G5o -> 22 -> S2 - > 21 -> A2 -> Gfi1 -> Gfo -> A4) is formed in the M/T as shown by the solid line in FIG. 7. Accordingly, the reduction ratio of the M/T is set at a reduction ratio of fifth-gear stage GT5, when the vehicle is running frontward. The GT5 is represented by a value ((number of teeth of G5o) / (number of teeth of G57i)) * (first final reduction ratio GTf1). Thus, a relationship of GT4 > GT5 is established.

### <Sixth-gear stage>

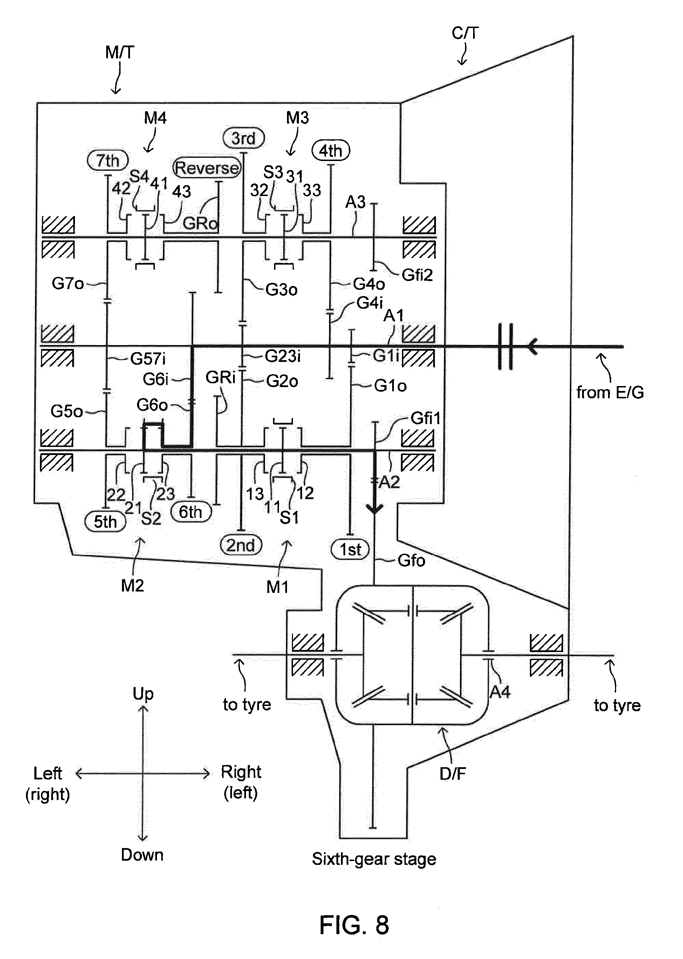

When the shift lever is operated to the position corresponding to the sixth-gear stage, only the sleeve S2 is set at the sixth-gear state, and the other sleeves S1, S3 and S4 are set at the unconnected states, as shown in FIG. 8. Consequently, the power transmission system of (A1 -> G6i -> G6o -> 23 -> S2 -> 21 -> A2 -> Gfi1 -> Gfo -> A4) is formed in the M/T as shown by the solid line in FIG. 8. Accordingly, the reduction ratio of the M/T is set at a reduction ratio of sixth-gear stage GT6, when the vehicle is running frontward. The GT6 is represented by a value ((number of teeth of G6o) / (number of teeth of G6i)) * (first final reduction ratio GTf1). Thus, a relationship of GT5 > GT6 is established.

### <Seventh-gear stage>

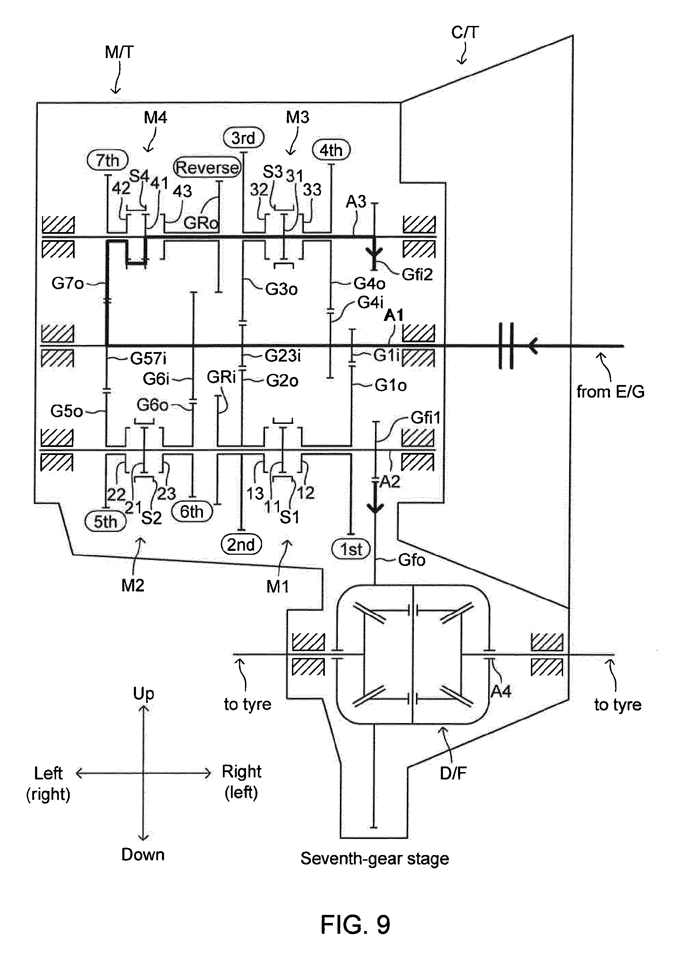

When the shift lever is operated to the position corresponding to the seventh-gear stage, only the sleeve S4 is set at the seventh-gear state, and the other sleeves S1, S2 and S3 are set at the unconnected states, as shown in FIG. 9. Consequently, the power transmission system of (A1 -> G57i -> G7o -> 42 -> S4 - > 41 -> A3 -> Gfi2 -> Gfo -> A4) is formed in the M/T as shown by the solid line in FIG. 9. Accordingly, the reduction ratio of the M/T is set at a reduction ratio of seventh-gear stage GT7, when the vehicle is running frontward. The GT7 is represented by a value ((number of teeth of G7o) / (number of teeth of G57i)) * (second final reduction ratio GTf2). Thus, a relationship of GT6 > GT7 is established.

### <Reverse-gear stage>

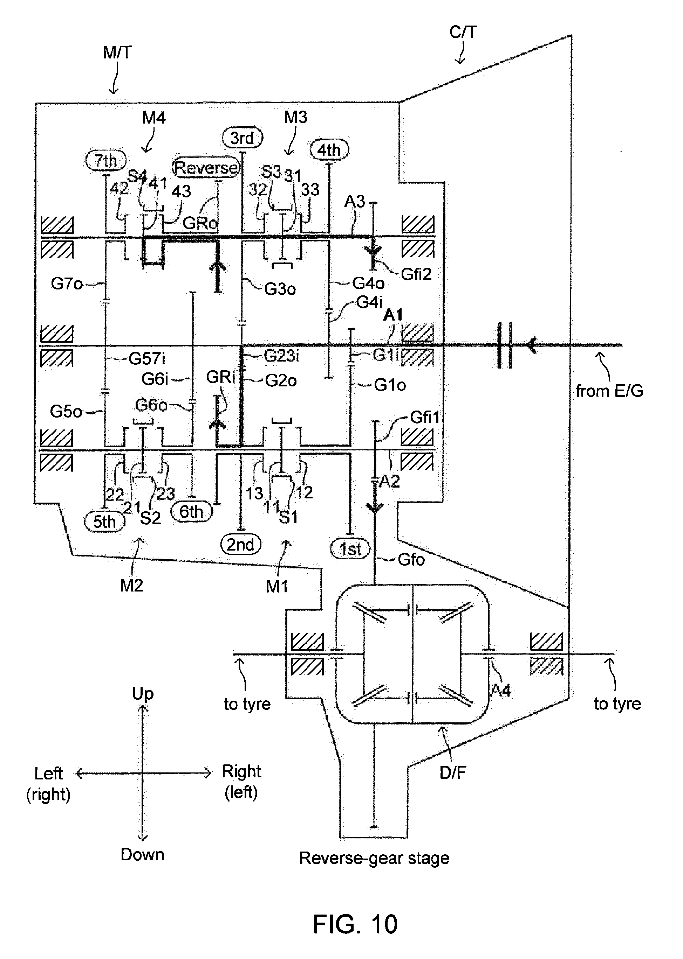

When the shift lever is operated to the position corresponding to the reverse-gear stage, only the sleeve S4 is set at the reverse-gear state, and the other sleeves S1, S2, and S3 are set at the unconnected states, as shown in FIG. 10. Consequently, the power transmission system of (A1 -> G23i -> G2o -> GRi - > GRo -> 43 -> S4 -> 41 -> A3 -> Gfi2 -> Gfo -> A4) is formed in the M/T as shown by the solid line in FIG. 10. Accordingly, the reduction ratio of the M/T is set at a reduction ratio of reverse-gear stage GTR, when the vehicle is running frontward. The GTR is represented by a value ((number of teeth of G2o) / (number of teeth of G23i)) * ((number of teeth of GRo) / (number of teeth of GRi)) * (second final reduction ratio GTf2).

### (Function, Effects)

Next, the functions and effects of the thus configured "seven-speed M/T with the single gear stage for moving the vehicle backward" according to the present invention will be described.

In the M/T (refer to FIG. 1), two of "shared drive gears" G23i and G57i are provided. Consequently, it is possible to configure a seven-speed M/T in such a manner that the "number of gears arranged to the input shaft" is five, similarly to the conventional seven-speed M/T having the five gears arranged to the input shaft (shown in FIG. 20). Accordingly, the "seven-speed M/T with the single gear stage for moving the vehicle backward" which has an overall short length can be provided without comprising the idle shaft, wherein the overall short length is substantially equal to the length of the conventional seven-speed M/T shown in FIG. 20

The configuration of the seven-speed M/T wherein three of the "shared drive gears" are provided on the input shaft A1 may be imagined. As compared with such an imagined configuration, the embodiment described above can achieve the "widening of range of the reduction ratio." That is, the embodiment described above can maximize the difference (ratio) between the reduction ratio of the first-gear stage (lowest-speed-gear stage) and the reduction of the seventh-gear stage (highest-speed-gear stage). This is because, as the number of the "shared drive gear" becomes larger, the "degree of design freedom regarding the reduction ratios from first to seventh gear" becomes lower.

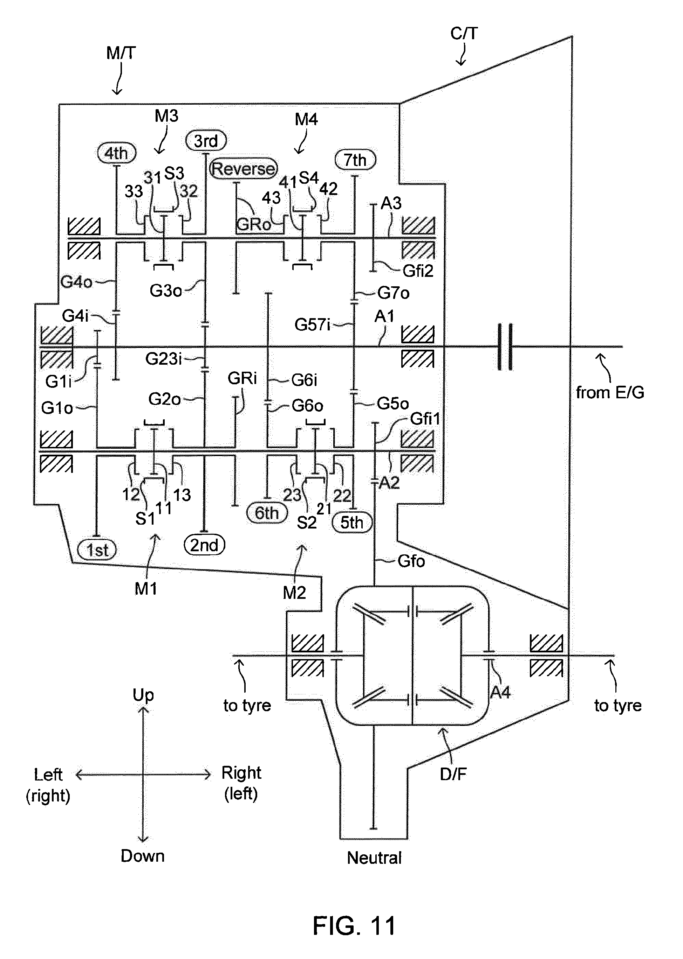

The present invention is not limited to the embodiment described above, various modifications may be adopted within the scope of the invention. For example, a configuration shown in FIG. 11 may be adopted as a modification of the embodiment shown in FIG. 1. The configuration shown in FIG. 11 will be briefly described as follows.

A "seven-speed M/T with a single gear stage for moving a vehicle backward" shown in FIG. 11 also comprises four shafts of an input shaft A1, a first intermediate shaft A2, a second intermediate shaft A3, and an output shaft A4, and does not comprise an idle shaft, similarly to the embodiment described above.

A drive gear G57i used as a fifth-gear drive gear and a seventh-gear drive gear in common, a sixth-gear drive gear G6i, a drive gear G23i used as a second-gear drive gear and a third-gear drive gear in common, a fourth-gear drive gear G4i, and a first-gear drive gear G1i are coaxially and relatively non-rotatably fixed to the input shaft A1, in order from the side closer to the engine E/G (a clutch).

A fifth-gear driven gear G5o, a sixth-gear driven gear G6o, a reverse-gear drive gear GRi which rotates unitarily with a second-gear driven gear G2o, the second-gear driven gear G2o, and a first-gear driven gear G1o are coaxially arranged to the first intermediate shaft A2, in order from the side closer to the engine E/G, such that they are relatively rotatable. The driven gears G5o, G6o, G2o, and G1o always mesh with the drive gears G57i, G6i, G23i, and G1i, respectively. A first final drive gear Gfi1 is coaxially and relatively non-rotatably fixed to the first intermediate shaft A2 at a closer side to the engine E/G with respect to the G5o.

A seventh-gear driven gear G7o, a reverse-gear driven gear GRo, a third-gear driven gear G3o, and a fourth-gear driven gear G4o are coaxially arranged to the second intermediate shaft A3 in order from the side closer to the engine E/G, such that they are relatively rotatable. The driven gears G7o, GRo, G3o, and G4o always mesh with the drive gears G57i, GRi, G23i, and G4i, respectively. A second final drive gear Gf21 is coaxially and relatively non-rotatably fixed to the second intermediate shaft A3 at a closer side to the engine E/G with respect to the G7o.

A final driven gear Gfo which is integrated with a housing of a D/F having a well-known structure is coaxially arranged to an output shaft A4 (which, in the present example, rotates unitarily with the housing of the D/F). The Gfo always meshes with the Gfi1 and the Gfi2. In addition, similarly to the embodiment described above, the three patterns (patterns 1 to 3) which are the same as the three patterns described above exist, in order to have a "reduction ratio of the output shaft A4 to the input shaft A1" in the second-gear stage be larger than a "reduction ratio of the output shaft A4 to the input shaft A1" in the third-gear stage, and in order to have a "reduction ratio of the output shaft A4 to the input shaft A1" in the fifth-gear stage be larger than a "reduction ratio of the output shaft A4 to the input shaft A1" in the seventh-gear stage.

Furthermore, the configuration shown in FIG. 11 comprises first to fourth change-over mechanisms M1 to M4, as the embodiment described above. Detailed descriptions regarding the first to fourth change-over mechanisms M1 to M4 will be omitted, since they have the same configurations and functions/operations as those of the embodiment described above.

Two of "shared drive gears" G23i and G57i are arranged to the input shaft A1 in the configuration shown in FIG. 11. Accordingly, similarly to the embodiment described above, the "seven-speed M/T with the single gear stage for moving the vehicle backward" which has an overall short length can be provided without comprising the idle shaft, wherein the overall short length is substantially equal to the length of the conventional seven-speed M/T shown in FIG. 20. Further, as compared with the seven-speed M/T wherein three of the "shared drive gears" are provided on the input shaft A1, the configuration shown in FIG. 11 can achieve the "widening of range of the reduction ratio", similarly to the embodiment described above.

Furthermore, the final-driven gear Gfo which is integrated with the housing of the differential gear D/F is coaxially arranged to the output shaft A4, in the embodiment shown in FIG. 1 and the modification shown in FIG. 11. However, the final-driven gear Gfo itself which is not integrated with the housing of the differential gear D/F may be coaxially fixed directly to the output shaft A4.

## Claims

1. A manual transmission for a vehicle, which is interposed in a power transmission system connecting between an output shaft of an engine and drive wheels of a vehicle, the transmission having seven gear stages for moving the vehicle frontward and a single gear stage for moving the vehicle backward, comprising:
a housing;
an input shaft which is rotatably supported by said housing and forms a power transmission system between said output shaft of said engine and said input shaft;
a plurality of drive gears, for first to seventh-gear for moving the vehicle frontward, which are coaxially and relatively non-rotatably arranged to said input shaft;
a first intermediate shaft which is rotatably supported by said housing such that said first intermediate shaft is parallel to said input shaft at an eccentric position with respect to said input shaft;
a plurality of driven gears for a part of first to seventh-gear for moving said vehicle frontward, which always mesh with a plurality of drive gears for said part of first to seventh-gear, respectively, and which are coaxially and relatively rotatably arranged to said first intermediate shaft;
a drive gear, for moving said vehicle backward, which is coaxially and relatively rotatably arranged to said first intermediate shaft;
a first final drive gear which is coaxially and relatively non-rotatably arranged to said first intermediate shaft;
a second intermediate shaft which is rotatably supported by said housing such that said second intermediate shaft is parallel to said input shaft at an eccentric position with respect to said input shaft;
a plurality of driven gears for a rest of first to seventh-gear for moving said vehicle frontward, which always mesh with a plurality of said drive gears for said rest of first to seventh-gear, respectively, and which are coaxially and relatively rotatably arranged to said second intermediate shaft;
a driven gear, for moving said vehicle backward, which always meshes with said drive gear for moving said vehicle backward, and which is coaxially and relatively rotatably arranged to said second intermediate shaft;
a second final drive gear which is coaxially and relatively non-rotatably arranged to said second intermediate shaft;
an output shaft which is rotatably supported by said housing such that said output shaft is parallel to said input shaft at an eccentric position from said input shaft and forms a power transmission system between said drive wheels and said input shaft;
a final driven gear, which is coaxially and relatively non-rotatably arranged to said output shaft, and which always meshes with said first final drive gear and said second final drive gear;
change-over mechanisms which set a reduction ratio, which is a ratio of a rotational speed of said input shaft to a rotational speed of said output shaft, to a reduction ratio corresponding to a gear stage selected from said seven gear stages for moving said vehicle frontward and said single gear stage for moving said vehicle backward, by having said driven gear corresponding to said selected gear stage become unrotatable relative to said one of said first intermediate shaft or said second intermediate shaft, on which said driven gear corresponding to said selected gear stage is arranged;
wherein
said first-gear drive gear, said fourth-gear drive gear, a first shared drive gear used as said second-gear drive gear and said third-gear drive gear in common, said sixth-gear drive gear, and a second shared drive gear used as said fifth-gear drive and said seventh-gear drive gear in common are arranged to said input shaft in order from one side of an axial direction of said input shaft;
said first final drive gear, said first-gear driven gear, said second-gear driven gear, said reverse-gear drive gear which rotates unitarily with said second-gear driven gear, said sixth-gear driven gear, and said fifth-gear driven gear are arranged to said first intermediate shaft in order from said one side of said axial direction of said input shaft;
said second final drive gear, said fourth-gear driven gear, said third-gear driven gear, said reverse-gear driven gear, and said seventh-gear driven gear are arranged to said second intermediate shaft in order from said one side of said axial direction of said input shaft;
change-over mechanisms:
a first change-over mechanism, which is arranged between said first-gear driven gear and said second-gear driven gear, can selectively adopt one of an unconnected state such that said first-gear driven gear and said second-gear driven gear are able to rotate relative to said first intermediate shaft together, a first-gear state such that said first-gear driven gear is unable to rotate relative to said first intermediate shaft and said second-gear driven gear is able to rotate relative to said first intermediate shaft, and a second-gear state such that said first-gear driven gear is able to rotate relative to said first intermediate shaft and said second-gear driven gear is unable to rotate relative to said first intermediate shaft;
a second change-over mechanism, which is arranged between said fifth-gear driven gear and said sixth-gear driven gear, can selectively adopt one of an unconnected state such that said fifth-gear driven gear and said sixth-gear driven gear are able to rotate relative to said first intermediate shaft together, a fifth-gear state such that said fifth-gear driven gear is unable to rotate relative to said first intermediate shaft and said sixth-gear driven gear is able to rotate relative to said first intermediate shaft, and a sixth-gear state such that said fifth-gear driven gear is able to rotate relative to said first intermediate shaft and said sixth-gear driven gear is unable to rotate relative to said first intermediate shaft;
a third change-over mechanism, which is arranged between said third-gear driven gear and said fourth-gear driven gear, can selectively adopt one of an unconnected state such that said third-gear driven gear and said fourth-gear driven gear are able to rotate relative to said second intermediate shaft together, a third-gear state such that said third-gear driven gear is unable to rotate relative to said second intermediate shaft and said fourth-gear driven gear is able to rotate relative to said second intermediate shaft, and a fourth-gear state such that said third-gear driven gear is able to rotate relative to said second intermediate shaft and said fourth-gear driven gear is unable to rotate relative to said second intermediate shaft; and
a fourth change-over mechanism, which is arranged between said seventh-gear driven gear and said reverse-gear driven gear, can selectively adopt one of an unconnected state such that said seventh-gear driven gear and said reverse-gear driven gear are able to rotate relative to said second intermediate shaft together, a seventh-gear state such that said seventh-gear driven gear is unable to rotate relative to said second intermediate shaft and said reverse-gear driven gear is able to rotate relative to said second intermediate shaft, and a reverse-gear state such that said seventh-gear driven gear is able to rotate relative to said second intermediate shaft and said reverse-gear driven gear is unable to rotate relative to said second intermediate shaft.

2. A manual transmission for a vehicle, which is interposed in a power transmission system connecting between an output shaft of an engine and drive wheels of a vehicle, the transmission having seven gear stages for moving the vehicle frontward and a single gear stage for moving the vehicle backward, comprising:
a housing;
an input shaft which is rotatably supported by said housing and forms a power transmission system between said output shaft of said engine and said input shaft;
a plurality of drive gears, for first to seventh-gear for moving the vehicle frontward, which are coaxially and relatively non-rotatably arranged to said input shaft;
a first intermediate shaft which is rotatably supported by said housing such that said first intermediate shaft is parallel to said input shaft at an eccentric position with respect to said input shaft;
a plurality of driven gears for a part of first to seventh-gear for moving said vehicle frontward, which always mesh with a plurality of drive gears for said part of first to seventh-gear, respectively, and which are coaxially and relatively rotatably arranged to said first intermediate shaft;
a drive gear, for moving said vehicle backward, which is coaxially and relatively rotatably arranged to said first intermediate shaft;
a first final drive gear which is coaxially and relatively non-rotatably arranged to said first intermediate shaft;
a second intermediate shaft which is rotatably supported by said housing such that said second intermediate shaft is parallel to said input shaft at an eccentric position with respect to said input shaft;
a plurality of driven gears for a rest of first to seventh-gear for moving said vehicle frontward, which always mesh with a plurality of said drive gears for said rest of first to seventh-gear, respectively, and which are coaxially and relatively rotatably arranged to said second intermediate shaft;
a driven gear, for moving said vehicle backward, which always meshes with said drive gear for moving said vehicle backward, and which is coaxially and relatively rotatably arranged to said second intermediate shaft;
a second final drive gear which is coaxially and relatively non-rotatably arranged to said second intermediate shaft;
an output shaft which is rotatably supported by said housing such that said output shaft is parallel to said input shaft at an eccentric position from said input shaft and forms a power transmission system between said drive wheels and said input shaft;
a final driven gear, which is coaxially and relatively non-rotatably arranged to said output shaft, and which always meshes with said first final drive gear and said second final drive gear;
change-over mechanisms which set a reduction ratio, which is a ratio of a rotational speed of said input shaft to a rotational speed of said output shaft, to a reduction ratio corresponding to a gear stage selected from said seven gear stages for moving said vehicle frontward and said single gear stage for moving said vehicle backward, by having said driven gear corresponding to said selected gear stage become unrotatable relative to said one of said first intermediate shaft or said second intermediate shaft, on which said driven gear corresponding to said selected gear stage is arranged;
wherein
a first shared drive gear used as said fifth-gear drive gear and said seventh-gear drive gear in common, said sixth-gear drive gear, a second shared drive gear used as said second-gear drive gear and said third-gear drive gear in common, said fourth-gear drive gear and said first-gear drive gear are arranged to said input shaft in order from one side of an axial direction of said input shaft;
said first final drive gear, said fifth-gear driven gear, said sixth-gear driven gear, said reverse-gear drive gear which rotates unitarily with said second-gear driven gear, said second-gear driven gear and said first-gear driven gear are arranged to said first intermediate shaft in order from said one side of said axial direction of said input shaft;
said second final drive gear, said seventh-gear driven gear, said reverse-gear driven gear, said third-gear driven gear and said fourth-gear driven gear are arranged to said second intermediate shaft in order from said one side of said axial direction of said input shaft;
change-over mechanisms:
a first change-over mechanism, which is arranged between said first-gear driven gear and said second-gear driven gear, can selectively adopt one of an unconnected state such that said first-gear driven gear and said second-gear driven gear are able to rotate relative to said first intermediate shaft together, a first-gear state such that said first-gear driven gear is unable to rotate relative to said first intermediate shaft and said second-gear driven gear is able to rotate relative to said first intermediate shaft, and a second-gear state such that said first-gear driven gear is able to rotate relative to said first intermediate shaft and said second-gear driven gear is unable to rotate relative to said first intermediate shaft;
a second change-over mechanism, which is arranged between said fifth-gear driven gear and said sixth-gear driven gear, can selectively adopt one of an unconnected state such that said fifth-gear driven gear and said sixth-gear driven gear are able to rotate relative to said first intermediate shaft together, a fifth-gear state such that said fifth-gear driven gear is unable to rotate relative to said first intermediate shaft and said sixth-gear driven gear is able to rotate relative to said first intermediate shaft, and a sixth-gear state such that said fifth-gear driven gear is able to rotate relative to said first intermediate shaft and said sixth-gear driven gear is unable to rotate relative to said first intermediate shaft;
a third change-over mechanism, which is arranged between said third-gear driven gear and said fourth-gear driven gear, can selectively adopt one of an unconnected state such that said third-gear driven gear and said fourth-gear driven gear are able to rotate relative to said second intermediate shaft together, a third-gear state such that said third-gear driven gear is unable to rotate relative to said second intermediate shaft and said fourth-gear driven gear is able to rotate relative to said second intermediate shaft, and a fourth-gear state such that said third-gear driven gear is able to rotate relative to said second intermediate shaft and said fourth-gear driven gear is unable to rotate relative to said second intermediate shaft; and
a fourth change-over mechanism, which is arranged between said seventh-gear driven gear and said reverse-gear driven gear, can selectively adopt one of an unconnected state such that said seventh-gear driven gear and said reverse-gear driven gear are able to rotate relative to said second intermediate shaft together, a seventh-gear state such that said seventh-gear driven gear is unable to rotate relative to said second intermediate shaft and said reverse-gear driven gear is able to rotate relative to said second intermediate shaft, and a reverse-gear state such that said seventh-gear driven gear is able to rotate relative to said second intermediate shaft and said reverse-gear driven gear is unable to rotate relative to said second intermediate shaft.
